# EUROPEAN PATENT APPLICATION

(11) **EP 0 535 272 A1**
(43) Date of publication of application: **07.04.1993**
(21) Application number: 91202570.7
(22) Date of filing: 02.10.1991
(51) Int. Cl.: H04N 7/13

(54) **Hybrid encoder arrangement for an image processing system**

(71) Applicant: ALCATEL N.V., NL-1077 XX Amsterdam (NL); BELL TELEPHONE MANUFACTURING COMPANY Naamloze Vennootschap, B-2018 Antwerp (BE)
(72) Inventor: Van der Putten, Frank Octaaf, B-9328 Dendermonde (BE); Deloddere, Chris Frans Philippe, B-8300 Knokke-Heist (BE)
(74) Representative: Vermeersch, Robert

(57) **Abstract**

The encoder arrangement, apart from the generally used circuitry consisting of a transform circuit (DCT), a quantizer (Q) and dequantizer (Qi) circuit, a packetizer/encoder (VLC), a substraction circuit (SUB) to determine the difference between a current and a previous image block, an adder circuit (AD) to add the above difference to a previous image block and a memory module (M) to memorize the mentioned previous image block, includes a selection circuit (SE) to select only part of the image block for memorization and a supplementing circuit (SU) to supplement the thus partly memorized image block with zeros to obtain a complete previous image block. In this way the memory capacity for memorization of the image blocks can be reduced.

## Description

The present invention relates to an encoder arrangement for an image processing system, said encoder arrangement including a transform circuit which transforms an input signal, representative of at least part of an image, according to a transform algorithm into a first set of substantially uncorrelated frequency coefficients also representative of said image part and ordered according to their frequency which relates to the frequency content of said image part.

Such an arrangement is well known in the art, e.g. from the published international patent application WO89/06471. Therein all uncorrelated coefficients related to the mentioned image part are memorized and this implies relatively large memory circuits and consequently substantially high implementation costs.

An object of the invention is to provide an image processing system of the above type without the mentioned drawback.

This is achieved due to that fact that said encoder arrangement additionally includes :
- selection means to select from said first set a subset of lower frequency coefficients relating to the lower frequency content of said image part;
- supplementing means to supplement a previously memorized subset of coefficients representative of an image part of a preceeding image, which is homologous with said first mentioned image part, with an additional subset of coefficients to provide a second set of coefficients also representative of said homologous image part;
- evaluation means to evaluate, with respect to each other, parameters which are function of the difference between the respective coefficients of said first set and of said second set and parameters which are function of the coefficients of said first set;
- processing means to process either one of said difference and said first set of coefficients according to the result of said evaluation; and
- memory and substitution means to memorize said subset and substitute it for said previously memorized subset.

Since only part of the uncorrelated coefficients, i.e. the mentioned subset of lower frequency coefficients, is memorized, smaller memory circuits can be used than when memorizing all coefficients, thus reducing the implementation costs. The invention is based on the insight that coefficients related to the relatively high frequency content of an image part can be omitted because their perception to the human eye and their variance are relatively small.

The evaluation means decide whether the first set of coefficients or the mentioned difference will be processed according to the resources, more specifically the number of bits, needed therefore.

To determine the above difference all coefficients of the second set are subtracted from the uncorrelated coefficients of the first set. For this purpose the subset of previously memorized coefficients is supplemented with the mentioned additional subset to obtain a complete set of coefficients related to the considered homologous image part.

Another feature of the invention is that said subset is determined in an empiric way by iteratively reducing the number of coefficients thereof with a predetermined amount, starting from said first set, until after reconstruction of said image by a complementary decoder, an image with a predetermined quality is obtained.

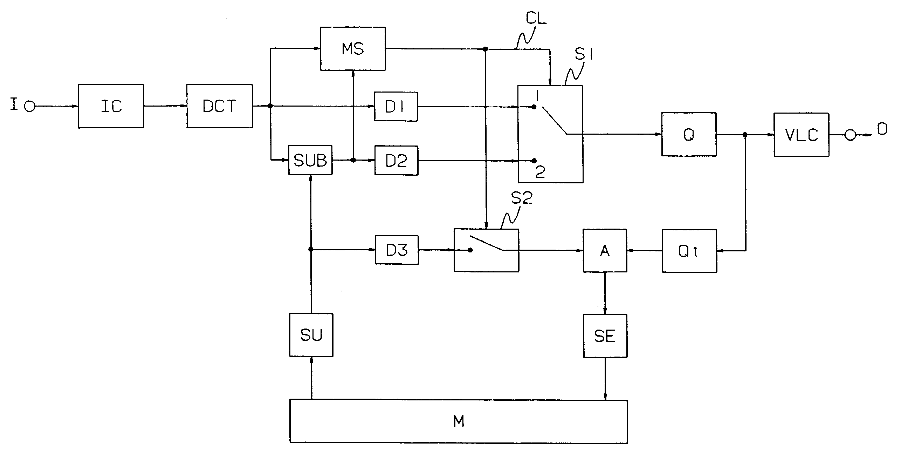

The above mentioned and other objects and features of the invention will become more apparent and the invention itself will be best understood by referring to the following description of an embodiment taken in conjunction with the accompanying drawing which represents a block diagram of an encoder arrangement according to the invention.

The encoder arrangement shown is used in an image processing system mounted in a transmitter circuit of a subscriber station which forms part of an Asynchronous Transfer Mode (ATM) communication system (not shown). The latter system includes a switching network to which a plurality of such subscriber stations have access and wherein signals, more specifically video signals, are transmitted between the stations in an asynchronous way under the form of cells or packets. The video signals are built up in accordance with the CCIR specification 601/656 and are each constituted by a stream of multiplexed luminance and chrominance 8-bit data words each representing the digital value of a luminance or chrominance analog sample of an image or picture element (pixel).

Because the processing of the luminance and chrominance data words is similar, only the processing of the luminance data words is considered in relative detail.

These data words are applied to an input I of the encoder arrangement and in an input circuit IC thereof they are assembled in blocks or groups each containing the luminance data words relating to 8x8 pixels of a part or block of an image.

As is well known the data words of such blocks are correlated.

From the input circuit IC the correlated data words of each such a block are applied to an input of a Discrete Cosine Transform circuit DCT which transforms these words into a matrix of 8x8 uncorrelated 12-bit linear coefficients. Each of these coefficients has a value indicative of a frequency of the image block and within the matrix it has a position which is function of this frequency. In the matrix this position shifts from left to right and from top to bottom for increasing frequencies. More particularly the upper left coefficient of such a matrix is function of the DC luminance level or brightness of the image block.

From DCT the matrix coefficients are applied to a first input of a substraction circuit SUB whose second input is connected to an output of a supplementing circuit SU to which a memory and substitution circuit M is connected. The outputs of DCT and SUB are connected via respective delay circuits D1 and D2 to the inputs 1 and 2 of a change-over gating circuit schematically represented by a mechanical switch circuit S1 which is controlled from DCT through a mode selection circuit MS having a control signal output CL as well as another input connected to the output of SUB. The output of S1 is connected through a quantizer circuit Q and an encoder/packetizer circuit VLC to an output O of the arrangement. The output of Q is further connected to a dequantizer circuit Qi.

The output of the supplementing circuit SU is also coupled to a first input of an adder circuit A via the cascade connection of a delay circuit D3 and a switch gating circuit schematically represented by a switch circuit S2 also controlled from the control signal output CL of MS. An output of the dequantizer circuit Qi is connected to a second input of A, whose output is coupled via a selection circuit SE to an input of the memory and substitution circuit M.

Following is a description of the working of the encoder arrangement represented in the figure.

After the input data words have been assembled in the input circuit IC they are transformed in the discrete cosine transform circuit DCT to a matrix or set of 8x8 coefficients. The latter set of coefficients is applied to the first input of the mode selection circuit MS and to the circuit SUB which substracts each of these coefficients from the corresponding coefficient of an homologous set of coefficients of a preceeding image. The latter coefficients are retrieved from the memory and selection circuit M via the supplementing circuit SU, as will be explained in detail later. The difference coefficients resulting from the substraction are applied to the second input of MS. From the coefficients provided by DCT the circuit MS determines the energy content of the corresponding image block, i.e. the image activity within that block, and from the difference coefficients it determines the energy content of a fictive image block of which these difference coefficients are representative. Based on the fact that the energy content of an image block is an indication of the number of bits needed to encode the coefficients thereof, MS compares the two energy contents and from this comparison determines wether the coefficients provided by DCT or the difference coefficients will be further processed, i.e. through its output CL it determines the position of the the switches S1 and S2. More particularly if the energy content of the image block is lower than the energy content of the fictive image block then S1 is brought or maintained in a position wherein its input 1 is connected to its output and S2 is in the open position, as shown in the figure. On the contrary, when the latter energy content is lower than the former S1 is brought or maintained in a position wherein its input 2 is connected to its output and S2 is in a closed position.

The delay circuits D1 and D2 ensure that the switch S1 is in the correct position when the output signals of DCT and SUB are applied to its inputs.

First the case shown in the figure is considered, i.e. S1 and S2 are positioned as shown. In this case the coefficients provided by the transform circuit DCT are further processed for transmission. Indeed, the set of frequency coefficients provided at the output of the circuit DCT is applied via the input 1 of the switch S1 to the quantizer circuit Q wherein these coefficients are each quantized, more particularly the value of each frequency coefficient is divided by an integer which increases with the frequency, the result being rounded off. As a result a set of compressed coefficients is obtained, the value of those derived from the higher frequency coefficients being zero after rounding off.

The technique of image quantization is well known and is for instance described in chapter 6, pp 140-161, of the book "Digital Image Processing" by W.K. Pratt published by John Wiley and Sons, 1978.

The compressed coefficients are applied to the input of the encoder/packetizer circuit VLC in ascending order of frequency, all zero coefficients being replaced by one end-of-block code.

After packetization by VLC the coefficients are transmitted to the ATM switching network mentioned above. At the receiving side the received packets are processed by a complementary decoder (not shown) and the image is reconstructed.

Following is a description of how the coefficients are memorized in the circuit M and retrieved therefrom.

The quantized coefficients are dequantized in the dequantizer circuit Qi which processes the coefficients in an inverse way of the quantizing circuit Q. The dequantized coefficients are applied to the second input of the adder circuit A. The switch S2 being open, no signal is applied to the first input of the latter circuit and consequently the dequantized coefficients are applied as such to the input of the selection circuit SE which selects a predetermined subset of 40 coefficients from the 64 dequantized coefficients of each matrix and eliminates the other 24. This subset of 40 coefficients is stored in the memory M at the same address as the subset of dequantized coefficients corresponding to an homologous image block of a preceeding image thereby substituting the latter subset.

The above mentioned selection is based on the fact that considered over a long time interval the higher frequency coefficients of the 8x8 matrix after transformation have a relatively small variance compared to the lower frequency coefficients thereof and that the perception of a human eye decreases with increasing frequencies of an image. Therefore the selected subset consists of a subset of lower frequency coefficients from the set of 64 coefficients applied to the input of SE. Since the coefficients are applied to the latter input in ascending order of frequency, the subset of lower frequency coefficients is composed of the first n coefficients received by SE, where n is determined in an empirical way by considering the quality of the image obtained when decoding the transmitted packets and by taking into account the available storage capacity of the memory module M. In the considered embodiment n equals 40 and this result in a reduction of required memory capacity to 5/8 of the capacity needed to memorize all coefficients.

When, as mentioned earlier, the memorized subset of coefficients is retrieved from the module M via the supplementing circuit SU to be applied to the second input of the substraction circuit SUB, an additional subset of 64-n, i.e. 24, zero coefficients is added to the retrieved set by SU. In this way a completed set of 64 coefficients representative for the mentioned homologous part of a preceeding image is obtained.

Following is now a description of the operation of the encoder arrangement when under control of the mode selection circuit MS switch S1 is operates so as to connect its input 2 to its output and the switch S2 is closed. In this case the earlier mentioned set of difference coefficients provided by SUB and obtained by substracting from each coefficient provided by the circuit DCT the corresponding coefficient relating to the homologous block of a preceeding image, is quantized by the quantizer circuit Q, packetized by the encoder packetizer VLC and transmitted as explained earlier.

Switch S2 being closed the dequantized coefficients are each added to the corresponding coefficient of the mentioned set of coefficients representative of the homologous block of a preceeding image. This set is obtained by completing, in SU, the set of coefficients memorized by M with the necessary number of zero coefficients as explained earlier. The obtained sum coefficients are representative of the current image block and are applied to the input of the selection circuit SE where 40 of the 64 coefficients are selected for memorization by the circuit M, as explained earlier.

Image encoder circuits similar to the one described above, but without the selection and supplementing circuit SE and SU respectively are well known in the art e.g. from the mentioned international patent application. On the other hand, constructing the latter circuits SE and SU from their above given functional description is obvious for a person skilled in the art and is therefore not further described.

While the principles of the invention have been described above in connection with specific apparatus, it is to be clearly understood that this description is made only by way of example and not as a limitation on the scope of the invention.

## Claims

1. Encoder arrangement for an image processing system, said encoder arrangement including a transform circuit (DCT) which transforms an input signal (I) representative of at least part of an image, according to a transform algorithm into a first set of substantially uncorrelated frequency coefficients also representative of said image part and ordered according to their frequency which relates to the frequency content of said image part,
characterized in that said encoder arrangement additionally includes :
- selection means (SE) to select from said first set a subset of lower frequency coefficients relating to the lower frequency content of said image part;
- supplementing means (SU) to supplement a previously memorized subset of coefficients representative of an image part of a preceeding image, which is homologous with said first mentioned image part, with an additional subset of coefficients to provide a second set of coefficients also representative of said homologous image part;
- evaluation means (MS, SUB) to evaluate, with respect to each other, parameters which are function of the difference between the respective coefficients of said first set and of said second set and parameters which are function of the coefficients of said first set;
- processing means (S1, VLC) to process either one of said difference and said first set of coefficients according to the result of said evaluation; and
- memory and substitution means (M) to memorize said subset and substitute it for said previously memorized subset.

2. Encoder arrangement according to claim 1,
characterized in that said evaluation means (MS, SUB) include :
- substraction means (SUB) connected to said transform circuit (DCT) and to said supplementing means (SU) and providing said difference;
- mode selection means (MS) connected to said transform circuit (DCT) and to said substraction means (SUB) to perform said evaluation and to provide a control signal (CL) reflecting the result of said evaluation.

3. Encoder arrangement according to claim 2,
characterized in that said processing means include :
- a coder circuit (VLC) to encode the coefficients of either one of said first set and said difference;
- first gating means (S1) to connect either one of said transform circuit (DCT) and said subtraction circuit (SUB) with said coder circuit (VLC) according to said control signal (CL).

4. Encoder arrangement according to claim 1,
characterized in that said image part is a square of n by n pixels whilst said transform algorithm is a 2-dimensional discrete cosine transform.

5. Encoder arrangement according to claim 1,
characterized in that said subset is determined in an empiric way by iteratively reducing the number of coefficients thereof with a predetermined amount, starting from said first set, until after reconstruction of said image by a complementary decoder, an image with a predetermined quality is obtained.

6. Encoder arrangement according to claim 3,
characterized in that it also includes :
- a quantizer circuit (Q) connected between said first gating means (S1) and said coder circuit (VLC) to quantize either one of the coefficients of said first set and said difference;
- a dequantizer circuit (Q2) to dequantize said quantized coefficients;
- an adder circuit (A) connected to said supplementing means (SU) via second gating means (S2), also included in said encoder arrangement, to add said second set to said dequantized coefficients when said difference is processed, said second gating means (S2) being controlled by said control signal (CL) and the result of said addition being provided to said selection means (SE).

7. Encoder arrangement according to claim 1, characterized in that said additional set contains a number of zero coefficients, said number being equal to the number of not selected coefficients.

8. Encoder arrangement according to claim 1, characterized in that said parameters represent the energy content of said image part and the energy content of a fictive image part representative of said difference respectively.
